# EUROPEAN PATENT APPLICATION

(11) **EP 4 641 134 A1**
(43) Date of publication of application: **29.10.2025**
(21) Application number: 25166368.8
(22) Date of filing: 26.03.2025
(51) Int. Cl.: G01C 9/06, H01H 35/02, B60W 40/11, B60W 40/112, G01C 9/08

(54) **APPARATUS AND METHOD FOR DETECTING VEHICLE TILT**

(30) Priority: 26.04.2024 IN 202411033230
(71) Applicant: Honeywell International Inc., Charlotte, NC 28202 (US)
(72) Inventor: URS, M Kantha Raj, Charlotte, 28202 (US)
(74) Representative: Haseltine Lake Kempner LLP

(57) **Abstract**

A method and system are directed to configuring a tilt switch, the method comprises receiving acceleration data from a sensor (102), performing operations by a processing element (104) including determining a tilt angle based on the acceleration data, determining whether the tilt angle is greater than a positive angle threshold value, configuring a positive flag and a timer count based on the determination of the tilt angle being greater than the positive angle threshold value, determining that a settling time criterion has been satisfied based on the timer count, and generating a first tilt switch signal based on the satisfaction of the settling time criterion and the positive flag comprising a true Boolean value.

## Description

### TECHNICAL FIELD

Various embodiments of the present disclosure relate to detecting vehicle tilt, and more particularly to extracting static acceleration from acceleration data generated by micro-electromechanical systems (MEMS) accelerometers.

### BACKGROUND

A tilt switch may comprise a sensor for measuring the tilt of an object and may be used in various applications. For example, a tilt switch may be used to sense the state of tilt of a vehicle and provide an output to activate a hill assist system. In another example, a tilt switch may be used in a safety device for a hydraulic tipper system to trigger an alarm if a tipper truck is not in the horizontal plane (or beyond a given angle) while attempting to engage the hydraulic tipper system for unloading. Existing tilt switches have accuracy issues and are not reliable as a result of their mechanical nature, being single axis, and mounting position dependent. As an alternative, micro-electromechanical systems (MEMS) accelerometers may be used for measuring vehicle tilt. However, MEMS accelerometers are sensitive to vehicle vibrations and provide acceleration data that are prone to false readings. Applicant has identified many technical challenges and difficulties associated with acceleration data generated by MEMS accelerometers to determine vehicle tilt.

### BRIEF SUMMARY

Various embodiments described herein relate to components, apparatuses, and systems for configuring a tilt switch.

In accordance with various embodiments of the present disclosure, a method is provided. In some embodiments, the method comprises receiving, by one or more processors, acceleration data from a sensor; determining, by the one or more processors, a tilt angle based on the acceleration data; determining, by the one or more processors, the tilt angle is greater than a positive angle threshold value; configuring, by the one or more processors, a positive flag and a timer count based on the determination of the tilt angle being greater than the positive angle threshold value; determining, by the one or more processors, that a settling time criterion has been satisfied based on the timer count; and generating, by the one or more processors, a first tilt switch signal based on the satisfaction of the settling time criterion and the positive flag comprising a true Boolean value.

In some embodiments, the acceleration data comprises a plurality of data values that are associated with a plurality of axes. In some embodiments, the sensor comprises a micro-electromechanical systems (MEMS)-based three-axis accelerometer. In some embodiments, receiving the acceleration data further comprises periodically sampling the acceleration data by using a timer interrupt. In some embodiments, the tilt angle comprises a roll angle or a pitch angle. In some embodiments, the method further comprises determining the tilt angle is less than a negative angle threshold value; configuring a negative flag and the timer count based on the determination of the tilt angle being less than the negative angle threshold value; and generating a second tilt switch signal based on the satisfaction of the settling time criterion and the negative flag comprising a true Boolean value. In some embodiments, the method further comprises determining the negative flag comprises a true Boolean value; determining that the settling time criterion has not been satisfied based on the timer count; and incrementing the timer count. In some embodiments, the method further comprises determining the negative flag comprises a false Boolean flag; assigning a true Boolean value to the negative flag; assigning a false Boolean value to the positive flag; and resetting the timer count.

In some embodiments, the second tilt switch signal comprises a deactivation signal or a logic low voltage. In some embodiments, the first tilt switch signal comprises an activation signal or a logic high voltage. In some embodiments, the method further comprises determining the settling time criterion based on one or more of vehicle vibrations, vehicle speeds, or road conditions. In some embodiments, the method further comprises determining the positive flag comprises a true Boolean value; determining that the settling time criterion has not been satisfied based on the timer count; and incrementing the timer count. In some embodiments, the method further comprises determining the positive flag comprises a false Boolean value; assigning a true Boolean value to the positive flag; assigning a false Boolean value to a negative flag; and resetting the timer count.

According to another embodiment, a computing system is provided. In some embodiments, the computing system comprises memory and one or more processors communicatively coupled to the memory, the one or more processors configured to receive acceleration data from a sensor; determine a tilt angle based on the acceleration data; determine the tilt angle is greater than a positive angle threshold value; configure a positive flag and a timer count based on the determination of the tilt angle being greater than the positive angle threshold value; determine that a settling time criterion has been satisfied based on the timer count; and generate a first tilt switch signal based on the satisfaction of the settling time criterion and the positive flag comprising a true Boolean value.

In some embodiments, the one or more processors are further configured to determine the tilt angle is less than a negative angle threshold value; configure a negative flag and the timer count based on the determination of the tilt angle being less than the negative angle threshold value; and generate a second tilt switch signal based on the satisfaction of the settling time criterion and the negative flag comprising a true Boolean value. In some embodiments, the one or more processors are further configured to determine the negative flag comprises a true Boolean value; determine that the settling time criterion has not been satisfied based on the timer count; and increment the timer count. In some embodiments, the one or more processors are further configured to determine the negative flag comprises a false Boolean flag; assign a true Boolean value to the negative flag; assign a false Boolean value to the positive flag; and reset the timer count. In some embodiments, the one or more processors are further configured to determine the positive flag comprises a true Boolean value; determine that the settling time criterion has not been satisfied based on the timer count; and increment the timer count. In some embodiments, the one or more processors are further configured to determine the positive flag comprises a false Boolean value; assign a true Boolean value to the positive flag; assign a false Boolean value to a negative flag; and reset the timer count.

According to another embodiment, one or more non-transitory computer-readable storage media are provided. In some embodiments, the one or more non-transitory computer-readable storage media includes instructions that, when executed by one or more processors, cause the one or more processors to receive acceleration data from a sensor; determine a tilt angle based on the acceleration data; determine the tilt angle is greater than a positive angle threshold value; configure a positive flag and a timer count based on the determination of the tilt angle being greater than the positive angle threshold value; determine that a settling time criterion has been satisfied based on the timer count; and generate a first tilt switch signal based on the satisfaction of the settling time criterion and the positive flag comprising a true Boolean value.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 provides a system in accordance with some embodiments of the present disclosure;
FIG. 2 depicts an operational example of a sensor in accordance with some embodiments of the present disclosure;
FIG. 3 is an operational example of a tilt monitoring system 300 in accordance with some embodiments of the present disclosure;
FIG. 4 depicts example tilt values in accordance with some embodiments of the present disclosure;
FIG. 5 is a flow diagram illustrating an example process for configuring a tilt switch in accordance with some example embodiments of the present disclosure;
FIG. 6 is a flow diagram illustrating an example process for configuring a positive flag and a timer count based on a tilt angle being greater than a positive angle threshold value in accordance with some example embodiments of the present disclosure;
FIG. 7 is a flow diagram illustrating an example process for configuring a negative flag and a timer count based on a tilt angle being less than a negative angle threshold value in accordance with some example embodiments of the present disclosure; and
FIG. 8 depicts example tilt switch signals in accordance with some example embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc., are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with using acceleration data generated by MEMS accelerometers to determine vehicle tilt. Moreover, acceleration data generated by MEMS accelerometers include both static acceleration (e.g., rotations/inclinations) and dynamic acceleration (e.g., lateral and/or vertical movements) which may obfuscate actual tilt position. Various example embodiments of the present disclosure overcome such technical challenges and difficulties of acceleration data generated by MEMS accelerometers and provide various technical advancements and improvements. In accordance with various embodiments of the present disclosure, apparatuses and methods for extracting static acceleration from acceleration data generated by MEMS accelerometers based on a timer-based filter algorithm are disclosed.

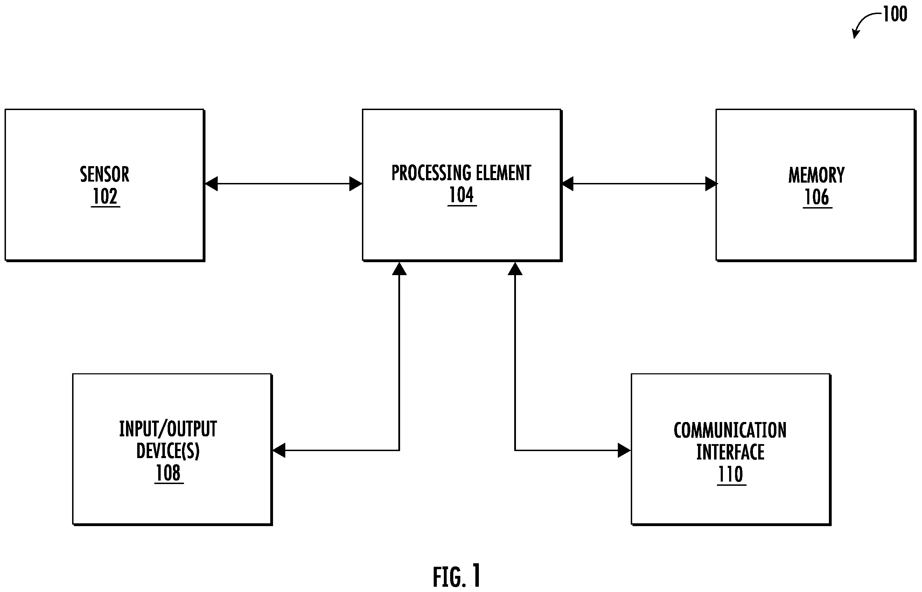

Referring now to FIG. 1, a system 100 is provided, which may be used in accordance with some embodiments of the present disclosure. As depicted in FIG. 1, the system 100 comprises a sensor 102 that is coupled to a processing element 104. The processing element 104 (also referred to as processors, processing circuitry, and/or similar terms used herein interchangeably) may communicate with other elements within the system 100 via a bus, for example. As will be understood, the processing element 104 may be embodied in a number of different ways.

For example, the processing element 104 may be embodied as one or more complex programmable logic devices (CPLDs), microprocessors, multi-core processors, coprocessing entities, application-specific instruction-set processors (ASIPs), microcontrollers, and/or controllers. Further, the processing element 104 may be embodied as one or more other processing devices or circuitry. The term circuitry may refer to an entirely hardware embodiment or a combination of hardware and computer program products. Thus, the processing element 104 may be embodied as integrated circuits, application specific integrated circuits (ASICs), field programmable gate arrays (FPGAs), programmable logic arrays (PLAs), hardware accelerators, other circuitry, and/or the like.

As will therefore be understood, the processing element 104 may be configured for a particular use or configured to execute instructions stored in memory 106 accessible to the processing element 104. As such, whether configured by hardware or computer program products, or by a combination thereof, the processing element 104 may be capable of performing steps or operations according to embodiments of the present disclosure when configured accordingly.

In some embodiments, memory 106 comprises volatile memory and/or non-volatile memory.

In one embodiment, volatile memory may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

In one embodiment, non-volatile memory may include a floppy disk, flexible disk, hard disk, solid-state storage (SSS) (e.g., a solid-state drive (SSD), solid-state card (SSC), solid-state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

Input/output device(s) 108 may comprise, for example, a display, speaker, or tactile instrument that is coupled to the processing element 104 for providing an output from the system 100, or a keypad, touch display, voice/speech or motion interfaces for providing input to the system 100.

System 100 further comprises a communication interface 110 that is coupled to the processing element 104 for communicating with various computing entities, such as by communicating data, content, information, and/or similar terms used herein interchangeably that may be transmitted, received, operated on, processed, displayed, stored, and/or the like. Such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, the processing element 104 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

In some embodiments, the sensor 102 comprises a sensor that is configured to measure movement relative to an absolute level plane. In some embodiments, the sensor 102 comprises a measuring device that measures acceleration along three axes (e.g., X, Y, and Z). The sensor 102 may generate acceleration data (e.g., comprising acceleration in the three axes) and communicate the acceleration data to processing element 104. In some embodiments, the processing element 104 determines a tilt angle (e.g., roll and/or pitch) of an object that is mounted with the sensor 102 based on acceleration data generated by and received from the sensor 102. In some embodiments, the processing element 104 may further generate ON/OFF signals that are associated with a tilt switch or tilt switch functionality based on the determined tilt angle (e.g., exceeding one or more threshold angles).

According to some embodiments, the sensor 102 may be mounted on an object (e.g., a vehicle or a tipper mechanism) that is monitored for tilt.

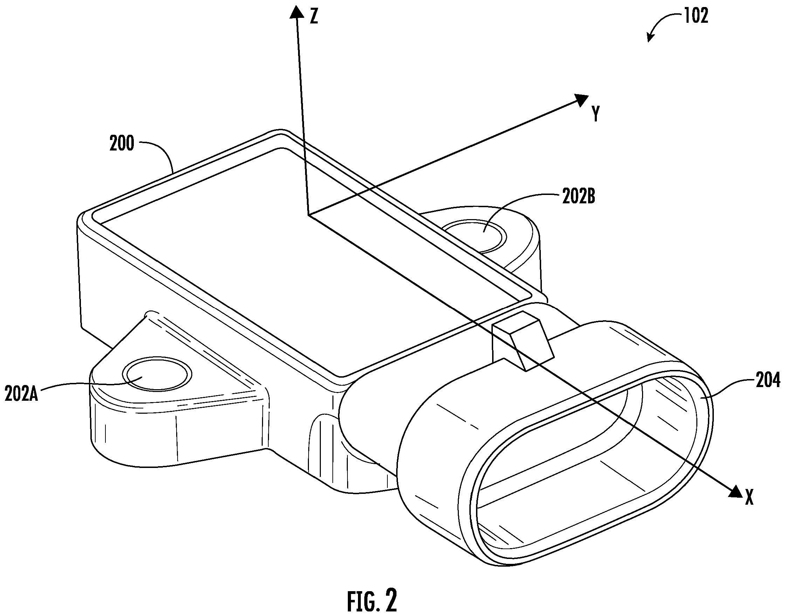

FIG. 2 depicts an operational example of a sensor 102 in accordance with some embodiments of the present disclosure. The sensor 102 may comprise a MEMS-based three-axis accelerometer that is configured to detect physical acceleration of an object coupled therewith. As depicted in FIG. 2, the sensor 102 comprises a housing 200 that encapsulates one or more sensor components (e.g., of a MEMS-based three-axis accelerometer). The housing 200 comprises mounting holes 202A and 202B that may provide apertures for mount the housing 200 onto an object (e.g., a vehicle or tipper mechanism) via screws, bolts, rivets, or any other suitable type of fastener. The housing 200 further comprises a terminal connector 204 for coupling with a communication wire to, for example, processing element 104 for transmitting acceleration data.

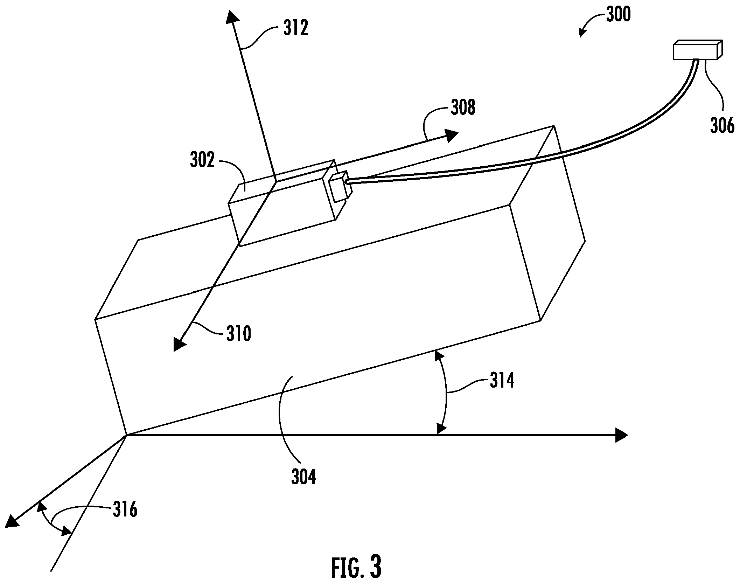

FIG. 3 is an operational example of a tilt monitoring system 300 in accordance with some embodiments of the present disclosure. The tilt monitoring system 300 comprises a sensor 302 that is mounted on a vehicle chassis 304. The sensor 302 may be configured to monitor and generate acceleration data that comprises longitudinal acceleration (X-axis) 308, lateral acceleration (Y-axis) 310, and vertical acceleration (Z-axis) 312. Acceleration data may be generated by and transmitted from the sensor 302 to the processing element 306. In some embodiments, the processor element 306 is configured to determine tilt angle of the vehicle chassis 304 based on the acceleration data and generate ON/OFF signals that are associated with tilt switch operation based on a determination of the tilt angle of the vehicle chassis 304 beyond allowable threshold angles. In some embodiments, tilt of the vehicle chassis 304 is determined based on pitch angle 314 and/or roll angle 316. The pitch angle 314 is associated with a rotation about the Y-axis and the roll angle 316 is associated with a rotation about the X-axis. Although a tilt angle is disclosed herewith as referring to a pitch angle or a roll angle, in some embodiments, the tilt angle may also comprise a yaw angle that is associated with a rotation about the Z-axis.

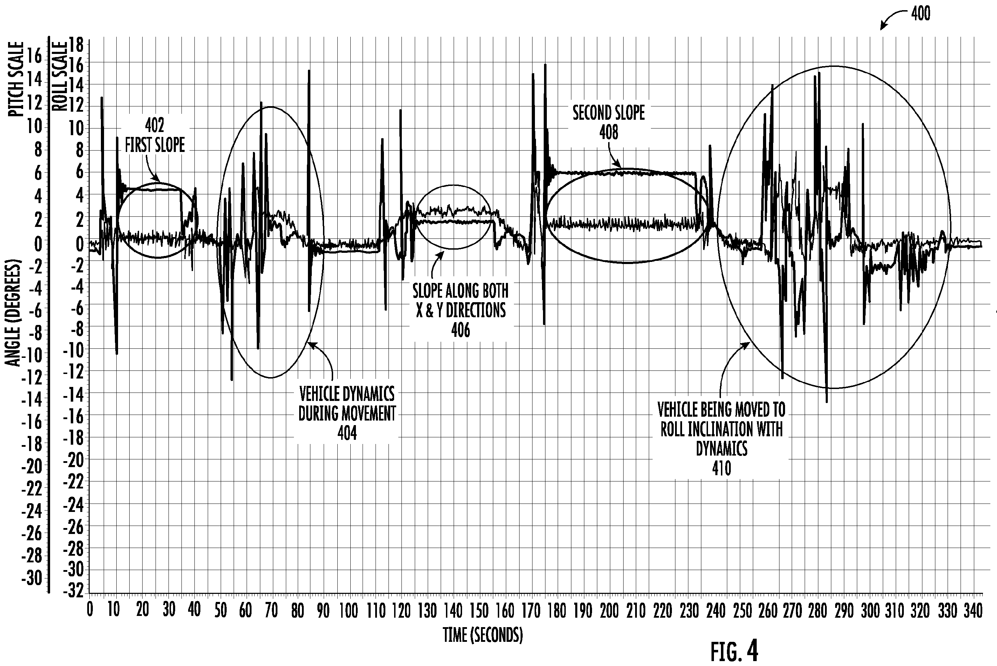

FIG. 4 depicts example tilt values 400 in accordance with some embodiments of the present disclosure. As disclosed herewith, acceleration data (e.g., generated by a MEMS-based three-axis accelerometer, such as sensor 102) may comprise data that captures static acceleration, dynamic acceleration, and vibrations of an object mounted with the sensor 102, such as a vehicle or tipper system. As depicted in FIG. 4, pitch angle and roll angle determined by a processor (e.g., processing element 104) based on data generated by a MEMS-based three-axis accelerometer that is mounted on a vehicle when stationary and during movement are plotted along an X-axis that is representative of time, in seconds, and a Y-axis that is representative of pitch/roll angle, in degrees.

In some example embodiments and as depicted in FIG. 4, a zero degrees angle is established as a baseline or reference angle for determining tilt switch trigger conditions based on pitch and roll angles that exceed threshold limits. In some embodiments, a determination of a tilt switch trigger condition may cause one or more responsive actions that prevent unsafe operating conditions or correct for excessive pitch and roll angles.

The data snapshot 402 comprises a plurality of pitch and roll angle values during a time interval of approximately between 10 through 40 seconds that is associated with a traversal of a vehicle over a first slope. During the first slope captured by data snapshot 402, the roll angle is determined to be relatively steady at approximately zero degrees. The pitch angle is determined to be relatively steady at approximately four degrees from 15 through 35 seconds. However, in the time interval between 10 and 15 seconds, the pitch angle determined is irregular and comprises values approximately between -10 degrees to 9 degrees, for example, due to a transition to the first slope.

The data snapshot 404 comprises a plurality of pitch and roll angle values during a time interval of approximately between 50 through 85 seconds that is associated with vehicle dynamics during movement where vehicle vibrations and random vehicle accelerations may occur. As compared to data snapshot 402, the plurality of pitch and roll angle values throughout the time interval between 50 through 85 seconds are irregular, inaccurate, and impulsive. For example, pitch angles may be in a range from approximately -29 degrees to 15 degrees and roll angle may be in a range from approximately -4 degrees to 5 degrees.

The data snapshot 406 comprises a plurality of pitch and roll angle values during a time interval of approximately between 125 through 155 seconds that is associated with a traversal of the vehicle over a slope along both X and Y axis directions. During the traversal of the slope along both X and Y axis directions captured by data snapshot 406, the roll angle is determined to be relatively steady at approximately one to two degrees while the pitch angle is determined to be relatively steady at approximately two to three degrees.

The data snapshot 408 comprises a plurality of pitch and roll angle values during a time interval of approximately between 175 through 235 seconds that is associated with a traversal of the vehicle over a second slope. During the second slope captured by data snapshot 408, the roll angle is determined to be relatively steady between approximately one to two degrees. The pitch angle is determined to be relatively steady at approximately six degrees from 180 through 230 seconds. However, in the time interval between 175 and 180 seconds, the pitch angle determined is irregular and comprises values approximately between -17 degrees to 16 degrees, for example, due to a transition to the second slope.

The data snapshot 410 comprises a plurality of pitch and roll angle values during a time interval of approximately between 240 through 330 seconds that is associated with a traversal of the vehicle over a roll inclination with dynamics. Similar to data snapshot 404, the plurality of pitch and roll angle values throughout the time interval between 240 through 330 are irregular, inaccurate, and impulsive. For example, pitch angles may be in a range from approximately -15 degrees to 16 degrees and roll angles may be in a range from approximately -2 degrees to 8 degrees.

Indeed, measurements based on raw acceleration data generated by MEMS accelerometers, as depicted in FIG. 4, may not be suitable for determining a tilt switch trigger condition for initiating tilt switch operation. According to various embodiments of the present disclosure, static acceleration used to determine tilt (e.g., pitch/roll angles) may be extracted from acceleration data by using a timer-based filter algorithm to distinguish static acceleration from noisy signals, such as vehicle vibration, and dynamic acceleration. In some embodiments, the timer-based filter algorithm may comprise a time factor that is tuned for, for example, vehicle vibrations, vehicle travel speed, and road conditions, to avoid false alarms.

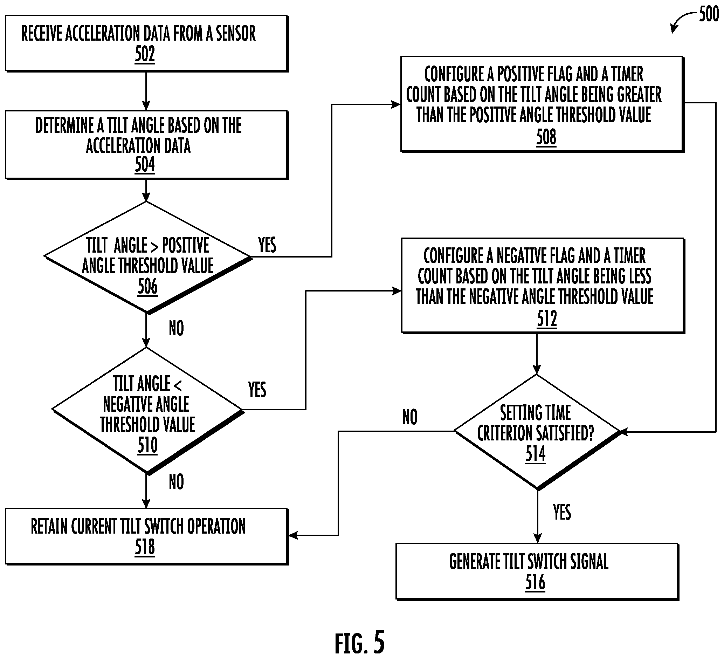

Referring now to FIG. 5, is a flow diagram illustrating an example process 500 for configuring a tilt switch in accordance with some example embodiments of the present disclosure. According to various embodiments of the present disclosure, a tilt switch comprises one or more sensors or sensor components, such as a MEMS-based three-axis accelerometer. In some example embodiments, a tilt switch is deployed in various industrial, automotive, machinery applications, such as hill assist systems, tipper truck safety systems, or any system that initiates one or more functions based on detections of critical rotational orientations or positions.

In some embodiments, the process 500 begins at step/operation 502 when the system 100 receives acceleration data from a sensor. According to various embodiments of the present disclosure, the acceleration data comprises a plurality of data values that are representative of acceleration along a plurality of axes (e.g., X, Y, and Z). In some embodiments, the sensor comprises a MEMS-based three-axis accelerometer that is configured to detect physical acceleration of an object coupled therewith. In some embodiments, receiving the acceleration data further comprises periodically sampling (e.g., at sampling intervals), by the system 100, the acceleration data from the sensor by using a timer interrupt to initiate process 500.

In some embodiments, subsequent to step/operation 502, the example process proceeds to step/operation 504, where the system 100 determines a tilt angle based on the acceleration data. For example, the acceleration data may comprise X, Y, and/or Z axis components (e.g., vectors) and one or more mathematical functions, known to one of ordinary skill in the art, may be applied to the X, Y, and/or Z axis components to determine a tilt angle. According to various embodiments of the present disclosure, a tilt angle comprises a roll angle or a pitch angle.

In some embodiments, subsequent to step/operation 504, the example process proceeds to step/operation 506, where the system 100 determines if the tilt angle is greater than a positive angle threshold value. The positive angle threshold value may comprise an angle that is greater than zero degrees (e.g., from a horizontal reference angle) in a first orientation. In some embodiments, the positive angle threshold value comprises an angle that is in an upward direction. In some example embodiments, the tilt angle may be greater than the positive angle threshold value when a vehicle, configured with the sensor, is ascending an inclined surface. In some other example embodiments, the tilt angle may be greater than the positive angle threshold value when a tipping mechanism of a tipper truck, configured with the sensor, is not in a horizontal plane and is in an inclined position during operation of the tipping mechanism.

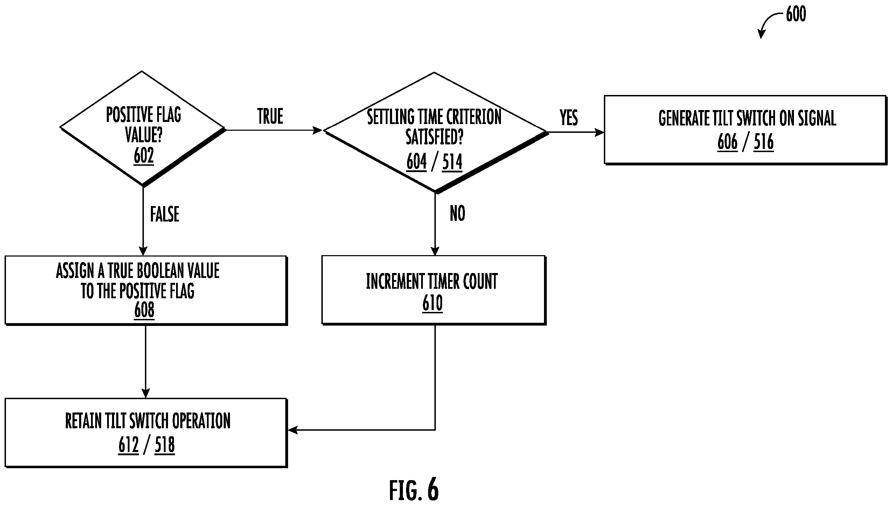

In some embodiments, subsequent to step/operation 506, if the tilt angle is greater than the positive angle threshold value, the example process proceeds to step/operation 508, where the system 100 configures a positive flag and a timer count based on the tilt angle being greater than the positive angle threshold value. That is, as discussed with reference to FIG. 4, tilt angles that are determined based on raw acceleration data from a MEMS-based accelerometer may be irregular, inaccurate, and impulsive. According to various embodiments of the present disclosure, configuring the positive flag and the timer count comprises isolating static acceleration from vibrations and dynamic acceleration by using a timer-based filter algorithm. In some embodiments, the timer-based filter algorithm comprises a timing feature that is tuned for vehicle conditions (such as vehicle vibrations vehicle speed, and road conditions) to prevent false alarms and to provide accurate measurements of tilt angle. Configuring the positive flag and the timer count based on the tilt angle being greater than the positive angle threshold value is described in further detail with reference to the description of FIG. 6.

In some embodiments, subsequent to step/operation 506, if the tilt angle is not greater than the positive angle threshold value, the example process proceeds to step/operation 510, where the system 100 determines if the tilt angle is less than a negative angle threshold value. The negative angle threshold value may comprise an angle that is less than the positive angle threshold value. In some embodiments, the negative angle threshold value comprises an angle that is in a downward direction relative to the positive angle threshold value. In some example embodiments, the tilt angle may be less than the negative angle threshold value when a vehicle, mounted with the sensor, is descending from an inclined surface. In some other example embodiments, the tilt angle may be less than the negative angle threshold value when a tipping mechanism of a tipper truck, configured with the sensor, is returning to a horizontal plane from an inclined position during operation of the tipping mechanism.

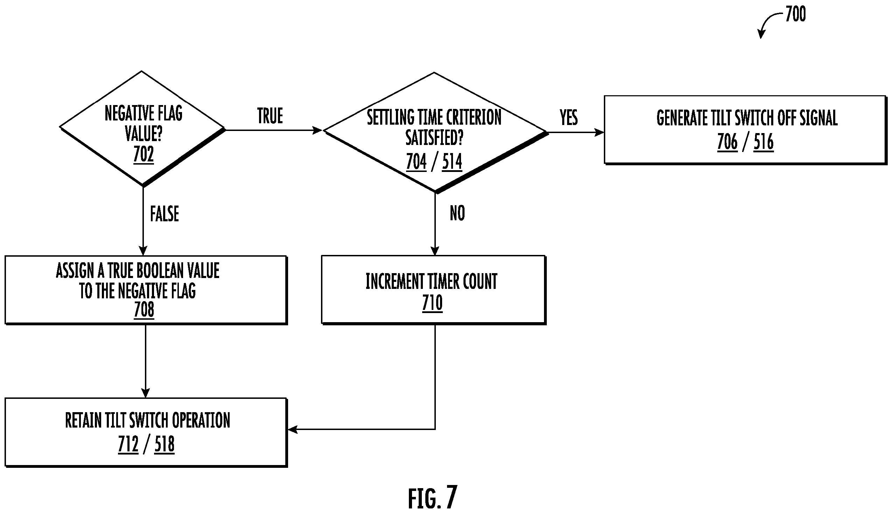

In some embodiments, subsequent to step/operation 510, if the tilt angle is less than the negative angle threshold value, the example process proceeds to step/operation 512, where the system 100 configures a negative flag and a timer count based on the tilt angle being less than the negative angle threshold value. Configuring the negative flag and the timer count also comprises isolating static acceleration from vibrations and dynamic acceleration by using a timer-based filter algorithm. Configuring the negative flag and the timer count based on the tilt angle being less than the negative angle threshold value is described in further detail with reference to the description of FIG. 7.

In some embodiments, subsequent to step/operation 510, if the tilt angle is not less than the negative angle threshold value, the example process proceeds to step/operation 518, where the system 100 retains a current tilt switch operation. For example, retaining a current tilt switch operation may comprise maintaining a tilt switch in a current mode of operation (e.g., remain off/inactive if currently off/inactive, or remain on/active if currently on/active). In some embodiments, retaining a current tilt switch operation comprises remaining in a current state of a tilt switch or a finite-state machine associated with a tilt switch. In some embodiments, retaining a current tilt switch operation comprises no action. In some embodiments, retaining a current tilt switch operation comprises maintaining an active state by continuing to send a data signal or voltage.

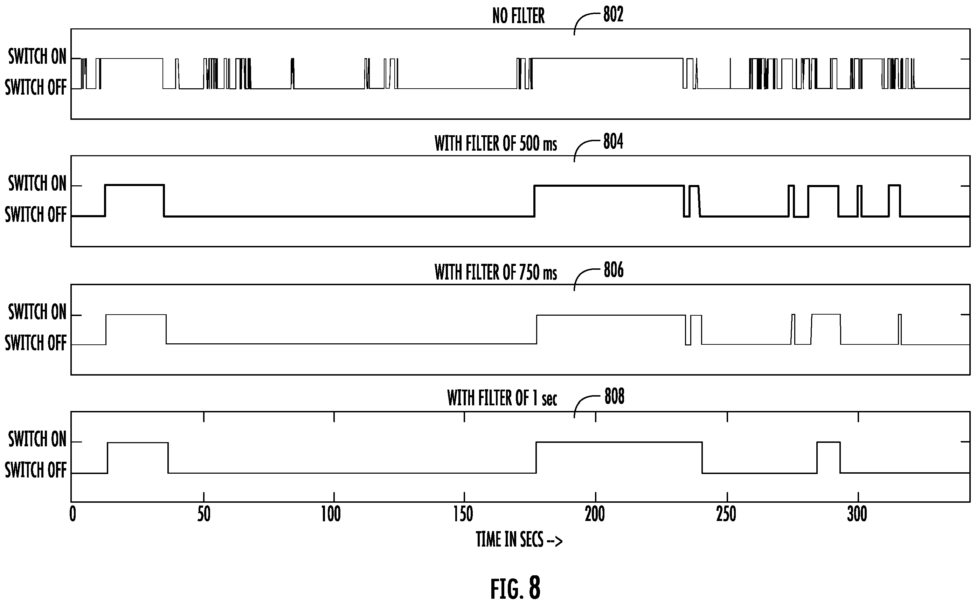

In some embodiments, subsequent to step/operation 508 or step/operation 512, the example process proceeds to step/operation 514, where the system 100 determines if a settling time criterion has been satisfied based on the timer count. In some embodiments, a settling time criterion describes a prerequisite amount of time for a tilt angle determined based on acceleration data to reach a steady state. According to various embodiments of the present disclosure, a settling time criterion comprises a filter parameter of a timer-based filter algorithm. In some embodiments, the settling time criterion is determined based on a propagation delay, a time required for measurement to slew to a vicinity of a final value, a time to recover from an overload condition associated with slew, and/or a time to settle to within a specified error. In some embodiments, the settling time criterion may be varied to accommodate for environmental or operational variables based on a particular application. For example, a settling time criterion used in vehicle systems may be determined or fine-tuned based on vehicle vibrations, vehicle speeds, and road conditions. Examples of tilt switch signals generated based on various settling time criterions used for filtering tilt angles with a timer-based filter algorithm are described with respect to the description of FIG. 8.

In some embodiments, subsequent to step/operation 514, if the settling time criterion has been satisfied, the example process proceeds to step/operation 516, where the system 100 generates a tilt switch signal. In some embodiments, generating the tilt switch signal comprises generating an activation signal/logic high voltage (e.g., based on the tilt angle being greater than the positive angle threshold value) or a deactivation signal/logic low voltage (e.g., based on the tilt angle being less than the negative angle threshold value) based on a true Boolean value of the positive flag or the negative flag, respectively, after the satisfaction of the settling time criterion. In some embodiments, generating the tilt switch signal comprises transitioning from a current state to a next state. For example, a tilt switch may be (i) transitioned from an inactive state to an active state based on the tilt angle being greater than the positive angle threshold value or (ii) transitioned from an active state to an inactive state based on the tilt angle being less than the negative angle threshold value. In some embodiments, generating the tilt switch signal further comprises resetting a timer count associated with the settling time.

In some embodiments, subsequent to step/operation 514, if the settling time criterion has not been satisfied, the example process proceeds to step/operation 518, where the system 100 retains a current tilt switch operation.

Referring now to FIG. 6, is a flow diagram illustrating an example process 600 for configuring a positive flag and a timer count based on a tilt angle being greater than the positive angle threshold value in accordance with some example embodiments of the present disclosure.

In some embodiments, the process 600 begins at step/operation 602 after one or more operations of another process, such as the operation 506 of the process 500 as depicted and described. In some embodiments, at step/operation 602 the system 100 determines a value of a positive flag. The positive flag may comprise a Boolean variable that is representative of a tilt angle that is greater than the positive angle threshold value. In some embodiments, a positive flag may be used to set or record whether a tilt angle is greater than the positive angle threshold value. For example, a positive flag that comprises a false Boolean value may represent a tilt angle that is not greater than the positive angle threshold value and a positive flag that comprises a true Boolean value may represent a tilt angle that is greater than the positive angle threshold value.

In some embodiments, subsequent to step/operation 602, if the positive flag is true, the example process proceeds to step/operation 604 or step/operation 514 of the process 500 as depicted and described, where the system 100 determines if a settling time criterion has been satisfied.

In some embodiments, subsequent to step/operation 604 or step/operation 514, if the settling time criterion has been satisfied, the example process proceeds to step/operation 606 or step/operation 516 of the process 500 as depicted and described, where the system 100 generates a tilt switch on signal. The tilt switch on signal may be associated with an activation of a tilt switch. In some embodiments, generating the tilt switch on signal comprises generating an activation signal or a logic high voltage (e.g., based on a tilt angle being greater than the positive angle threshold value), which may be used to enable one or more functionalities. For example, the one or more functionalities may comprise a warning or a safety feature. In some embodiments, generating the tilt switch on signal further comprises resetting a timer count associated with the settling time criterion.

In some embodiments, subsequent to step/operation 604 or step/operation 514, if the settling time criterion has not been satisfied, the example process proceeds to step/operation 610 where the system 100 increments a timer count associated with the settling time criterion.

In some embodiments, subsequent to step/operation 610, the example process proceeds to step/operation 612 or step/operation 518 of the process 500 as depicted and described, where the system 100 retains a current switch operation.

In some embodiments, subsequent to step/operation 602, if the positive flag is false, the example process proceeds to step/operation 608 where the system 100 assigns a true Boolean value to the positive flag. Assigning a true Boolean value to the positive flag may represent an (i) initial detection of a tilt angle being greater than the positive angle threshold value or (ii) a transition after a detection of a tilt angle being less than the positive angle threshold value or a negative angle threshold value. In some embodiments, assigning a true Boolean value to the positive flag further comprises assigning a false Boolean value to a negative flag and resetting a timer count associated with the settling time criterion.

In some embodiments, subsequent to step/operation 608, the example process proceeds to step/operation 612 or step/operation 518 of the process 500 as depicted and described, where the system 100 retains a current switch operation.

Referring now to FIG. 7, is a flow diagram illustrating an example process 700 for configuring a negative flag and a timer count based on a tilt angle being less than a negative angle threshold value in accordance with some example embodiments of the present disclosure.

In some embodiments, the process 700 begins at step/operation 702 after one or more operations of another process, such as the operation 510 of the process 500 as depicted and described. In some embodiments, at step/operation 702 the system 100 determines a value of a negative flag. The negative flag may comprise a Boolean variable that is representative of a tilt angle that is less than the negative angle threshold value. In some embodiments, a negative flag may be used to set or record whether a tilt angle is less than the negative angle threshold value. For example, a negative flag that comprises a false Boolean value may represent a tilt angle that is not less than the negative angle threshold value and a negative flag that comprises a true Boolean value may represent a tilt angle that is less than the negative angle threshold value.

In some embodiments, subsequent to step/operation 702, if the negative flag is true, the example process proceeds to step/operation 704 or step/operation 514 of the process 500 as depicted and described, where the system 100 determines if a settling time criterion has been satisfied.

In some embodiments, subsequent to step/operation 704 or step/operation 514, if the settling time criterion has been satisfied, the example process proceeds to step/operation 706 or step/operation 516 of the process 500 as depicted and described, where the system 100 generates a tilt switch off signal. The tilt switch off signal may be associated with a deactivation of a tilt switch. In some embodiments, generating the tilt switch off signal comprises generating a deactivation signal or a logic low voltage (e.g., based on a tilt angle being less than the negative angle threshold value), which may be used to disable one or more functionalities. For example, the one or more functionalities may comprise a warning or a safety feature. In some embodiments, generating the tilt switch off signal further comprises resetting a timer count associated with the settling time criterion.

In some embodiments, subsequent to step/operation 704 or step/operation 514, if the settling time criterion has not been satisfied, the example process proceeds to step/operation 710 where the system 100 increments a timer count associated with the settling time criterion.

In some embodiments, subsequent to step/operation 710, the example process proceeds to step/operation 712 or step/operation 518 of the process 500 as depicted and described, where the system 100 retains a current switch operation.

In some embodiments, subsequent to step/operation 702, if the negative flag is false, the example process proceeds to step/operation 708 where the system 100 assigns a true Boolean value to the negative flag. Assigning the negative flag with a true Boolean value may represent an (i) initial detection of a tilt angle being less than the negative angle threshold value or (ii) a transition after a detection of a tilt angle being greater than a positive angle threshold value or the negative angle threshold value. In some embodiments, assigning the negative flag with a true Boolean value further comprises assigning a positive flag with a false Boolean value and resetting a timer count associated with the settling time criterion.

In some embodiments, subsequent to step/operation 708, the example process proceeds to step/operation 712 or step/operation 518 of the process 500 as depicted and described, where the system 100 retains a current switch operation.

It is noted that each block of a flowchart, and combinations of blocks in a flowchart, may be implemented by various means such as hardware, firmware, circuitry, and/or other devices associated with execution of software including one or more computer program instructions. For example, one or more of the steps/operations described in FIG. 5, FIG. 6, and FIG. 7 may be embodied by computer program instructions, which may be stored by a non-transitory memory of an apparatus employing an embodiment of the present disclosure and executed by a processor component in an apparatus (such as, but not limited to, processing element 104). For example, these computer program instructions may direct the processor component to function in a particular manner, such that the instructions stored in the computer-readable storage memory produce an article of manufacture, the execution of which implements the function specified in the flowchart block(s).

FIG. 8 depicts example tilt switch signals in accordance with some example embodiments of the present disclosure. Tilt switch signal samples 802 through 806 comprise tilt switch signals that may be generated (e.g., by system 100) in response to tilt angles determined from acceleration data (e.g., generated by sensor 102) of a vehicle by applying a timer-based filter algorithm with various settling time criterion filter parameters. The tilt switch signal samples 802 through 806 comprise tilt switch signals that are initiated between "Switch ON" and "Switch OFF" modes of operation over a given sample time window measured in seconds.

The tilt switch signal sample 802 is representative of tilt switch signals that are generated without using a settling time criterion filter. As depicted, without the use of a settling time criterion filter, seemingly random, short, and frequent changes in tilt switch signals may occur in the generation of tilt switch signals due to environmental and/or operating conditions (e.g., vehicle vibrations, vehicle traveling speed and road conditions). To mitigate less than ideal environmental and/or operating conditions, a timer-based filter algorithm may be applied to smooth and filter aberrative tilt angle detections, thereby reducing false positives and excessive changes in tilt switch signal and operation.

The tilt switch signal sample 804 is representative of tilt switch signals that are generated using a settling time criterion filter parameter of 500 milliseconds. The tilt switch signal sample 806 is representative of tilt switch signals that are generated using a settling time criterion filter parameter of 750 milliseconds. The tilt switch signal sample 808 is representative of tilt switch signals that are generated using a settling time criterion filter parameter of 1 second. As such, any of tilt switch signal samples 804 through 808 comprises an improvement over tilt switch signal sample 802 in terms of generating tilt switch signals suitable for stable tilt switch operation.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A method comprising:
receiving, by one or more processors, acceleration data from a sensor;
determining, by the one or more processors, a tilt angle based on the acceleration data;
determining, by the one or more processors, the tilt angle with respect to a positive angle threshold value;
configuring, by the one or more processors, a positive flag and a timer count based on the tilt angle being greater than the positive angle threshold value;
determining, by the one or more processors, that a settling time criterion has been satisfied based on the timer count; and
generating, by the one or more processors, a first tilt switch signal based on the settling time criterion being satisfied and the positive flag comprising a true Boolean value.

2. The method of claim 1, wherein the tilt angle comprises a roll angle or a pitch angle.

3. The method of claim 1 further comprising:
determining the tilt angle is less than a negative angle threshold value;
configuring a negative flag and the timer count based on the tilt angle being less than the negative angle threshold value; and
generating a second tilt switch signal based on the settling time criterion being satisfied and the negative flag comprising a true Boolean value.

4. The method of claim 3 further comprising:
determining the negative flag comprises a true Boolean value;
determining that the settling time criterion has not been satisfied based on the timer count; and
incrementing the timer count.

5. The method of claim 3 further comprising:
determining the negative flag comprises a false Boolean flag;
assigning a true Boolean value to the negative flag;
assigning a false Boolean value to the positive flag; and
resetting the timer count.

6. The method of claim 1 further comprising determining the settling time criterion based on one or more of vehicle vibrations, vehicle speeds, or road conditions.

7. The method of claim 1 further comprising:
determining the positive flag comprises a true Boolean value;
determining that the settling time criterion has not been satisfied based on the timer count; and
incrementing the timer count.

8. The method of claim 1 further comprising:
determining the positive flag comprises a false Boolean value;
assigning a true Boolean value to the positive flag;
assigning a false Boolean value to a negative flag; and
resetting the timer count.

9. A computing system comprising memory and one or more processors communicatively coupled to the memory, the one or more processors configured to:
receive acceleration data from a sensor;
determine a tilt angle based on the acceleration data;
determine the tilt angle with respect to a positive angle threshold value;
configure a positive flag and a timer count based on the tilt angle being greater than the positive angle threshold value;
determine that a settling time criterion has been satisfied based on the timer count; and
generate a first tilt switch signal based on the settling time criterion being satisfied and the positive flag comprising a true Boolean value.

10. The computing system of claim 9, wherein the one or more processors are further configured to:
determine the tilt angle is less than a negative angle threshold value;
configure a negative flag and the timer count based on the tilt angle being less than the negative angle threshold value; and
generate a second tilt switch signal based on the settling time criterion being satisfied and the negative flag comprising a true Boolean value.

11. The computing system of claim 10, wherein the one or more processors are further configured to:
determine the negative flag comprises a true Boolean value;
determine that the settling time criterion has not been satisfied based on the timer count; and
increment the timer count.

12. The computing system of claim 10, wherein the one or more processors are further configured to:
determine the negative flag comprises a false Boolean flag;
assign a true Boolean value to the negative flag;
assign a false Boolean value to the positive flag; and
reset the timer count.

13. The computing system of claim 9, wherein the one or more processors are further configured to:
determine the positive flag comprises a true Boolean value;
determine that the settling time criterion has not been satisfied based on the timer count; and
increment the timer count.

14. The computing system of claim 9, wherein the one or more processors are further configured to:
determine the positive flag comprises a false Boolean value;
assign a true Boolean value to the positive flag;
assign a false Boolean value to a negative flag; and
reset the timer count.

15. One or more non-transitory computer-readable storage media including instructions that, when executed by one or more processors, cause the one or more processors to:
receive acceleration data from a sensor;
determine a tilt angle based on the acceleration data;
determine the tilt angle with respect to a positive angle threshold value;
configure a positive flag and a timer count based on the tilt angle being greater than the positive angle threshold value;
determine that a settling time criterion has been satisfied based on the timer count; and generate a first tilt switch signal based on the settling time criterion being satisfied and the positive flag comprising a true Boolean value.
